# EUROPÄISCHE PATENTANMELDUNG

(11) **EP 3 604 923 A1**
(43) Veröffentlichungstag der Anmeldung: **05.02.2020**
(21) Anmeldenummer: 18020353.1
(22) Anmeldetag: 31.07.2018
(51) Int. Cl.: F23K 5/00, F23L 15/04, F23C 9/00

(54) **WÄRMERÜCKGEWINNUNGSSYSTEM FÜR EINEN OFEN MIT EINEM ODER MEHREREN BRENNERN**

(71) Anmelder: Linde Aktiengesellschaft, 80331 München (DE)
(72) Erfinder: Ulmer, Sebastian, 81477 München (DE); Jarosch, Maximilian, 81827 München (DE)
(74) Vertreter: Gellner, Bernd

(57) **Zusammenfassung**

Die vorliegende Erfindung betrifft ein Wärmerückgewinnungssystem (100) für einen Ofen (102) mit einem oder mehreren Brennern (101), wobei für jeden Brenner (101) jeweils eine Fluideinheit (110) vorgesehen ist, um dem jeweiligen Brenner (101) ein Fluid zuzuführen, insbesondere eine brennerspezifische Menge des Fluids, wobei für jeden Brenner (101) jeweils ein brennerspezifischer Rauchgaskanal (120) vorgesehen ist, der dazu eingerichtet ist, Rauchgas aus dem Ofen (102) abzuführen, insbesondere eine brennerspezifische Menge des Rauchgases, wobei die Fluideinheit (110) jedes Brenners (101) zumindest teilweise in dem brennerspezifischen Rauchgaskanal (120) des jeweiligen Brenners (101) verläuft, so dass thermische Energie des abgeführten Rauchgases in dem brennerspezifischen Rauchgaskanal (120) auf ein Fluid in der Fluideinheit (110) übertragbar ist.

## Beschreibung

Die Erfindung betrifft ein Wärmerückgewinnungssystem für einen Ofen mit einem oder einer Vielzahl von Brennern.

### Stand der Technik

In Brennern kann ein Brennstoff, z.B. Erdgas oder Methan, zusammen mit einem Oxidationsmittel, z.B. Luft oder Sauerstoff, zu einem Rauchgas verbrannt werden. Derartige Brenner können zum Befeuern von Öfen verwendet werden, z.B. von Glasöfen, um Glas von seinem festen Aggregatszustand in seinen flüssigen zu überführen.

Das von einem derartigen Brenner erzeugte Rauchgas hat vergleichsweise hohe Temperaturen von üblicherweise bis zu 1500°C oder höher und kann genutzt werden, um den Brennstoff und/oder das Oxidationsmittel vorzuwärmen. Zu diesem Zweck kann ein sog. diskontinuierlich betriebener Regenerator verwendet werden, welcher zumeist zwei Regeneratorbetten aufweist und abwechselnd in einem ersten und einem zweiten Betriebsmodus betrieben werden kann. Während des ersten Betriebsmodus kann das heiße Rauchgas durch ein erstes Regeneratorbett geführt werden und dieses aufwärmen. Sobald dieses vom Rauchgas durchströmte erste Regeneratorbett auf eine ausreichende Temperatur aufgewärmt ist, wird zwischen den Betriebsmodi umgeschaltet und das Rauchgas kann in dem zweiten Betriebsmodus durch ein zweites Regeneratorbett geführt werden. Durch das aufgewärmte erste Regeneratorbett kann in diesem zweiten Betriebsmodus das Brenngas und/oder das Oxidationsmittel geführt und vorgewärmt und anschließend dem Brenner zugeführt werden. Analog können Brenngas und/oder Oxidationsmittel in dem ersten Betriebsmodus durch das aufgewärmte zweite Regeneratorbett geführt und darin vorgewärmt werden.

In einem derartigen herkömmlichen Wärmerückgewinnungssystem kann eine Wärmerückgewinnung aus von einem Brenner erzeugtem Rauchgas zumeist nur mit geringer Effizienz durchgeführt werden, so dass nur ein vergleichsweise geringer Anteil der thermischen Energie des Rauchgases auf den Brennstoff bzw. das Oxidationsmittel übertragen werden kann. Das Rauchgas kann nach Durchlauf durch das entsprechende Regeneratorbett noch vergleichsweise hohe Temperaturen von bis zu über 800°C besitzen. Demgemäß kann ein entsprechend großer Anteil der im Rauchgas enthaltenen Energie nicht durch die Brennstoff- bzw. Oxidationsmittelvorwärmung zurückgewonnen werden, was zu einer vergleichsweise geringen Effizienz des entsprechenden Brenners führt.

Es ist daher wünschenswert, ein verbessertes Wärmerückgewinnungssystem zur Wärmerückgewinnung aus von Brennern erzeugtem Rauchgas bereitzustellen.

### Offenbarung der Erfindung

Erfindungsgemäß wird ein Wärmerückgewinnungssystem für einen Ofen mit einem oder einer Vielzahl von Brennern mit den Merkmalen des unabhängigen Patentanspruchs 1 vorgeschlagen. Vorteilhafte Ausgestaltungen sind Gegenstand der jeweiligen Unteransprüche sowie der nachfolgenden Beschreibung.

Für den Brenner bzw. für jeden Brenner der Vielzahl von Brennern ist jeweils eine Fluideinheit vorgesehen um dem jeweiligen Brenner ein Fluid zuzuführen, insbesondere jeweils eine brennerspezifische Menge des Fluids. Die Brenner sind insbesondere dazu eingerichtet, das Fluid zu einem Rauchgas zu verbrennen, gegebenenfalls unter Zugabe eines oder mehrerer weiterer Fluide.

Ferner ist für den Brenner bzw. für jeden Brenner jeweils ein brennerspezifischer Rauchgaskanal vorgesehen, der dazu eingerichtet ist, Rauchgas aus dem Ofen abzuführen, insbesondere eine brennerspezifische Menge des Rauchgases. Die Fluideinheit jedes Brenners verläuft zumindest teilweise in dem brennerspezifischen Rauchgaskanal des jeweiligen Brenners, so dass thermische Energie des abgeführten Rauchgases in dem brennerspezifischen Rauchgaskanal auf ein Fluid in der Fluideinheit übertragbar ist.

Beispielsweise können die Fluideinheiten jeweils als ein Rohr ausgebildet sein, welches zumindest teilweise in dem jeweiligen brennerspezifischen Rauchgaskanal verläuft. Die brennerspezifischen Rauchgaskanäle und die Fluideinheiten sind jeweils insbesondere aus einem hitzebeständigen, hochtemperaturfesten Werkstoff hergestellt. Beispielsweise können die brennerspezifischen Rauchgaskanäle aus Metall mit feuerfester Ausmauerung gefertigt sein und die Fluideinheiten beispielsweise aus Keramik.

In den einzelnen brennerspezifischen Rauchgaskanälen wird somit jeweils eine rekuperative Wärmerückgewinnung des aus dem Ofen abgeführten Rauchgases auf das dem jeweiligen Brenner zugeführte Fluid durchgeführt. Die jeweilige Fluideinheit und der jeweilige brennerspezifische Rauchgaskanal eines Brenners bilden somit insbesondere einen Wärmeübertrager zum Erwärmen bzw. Vorwärmen des dem jeweiligen Benner zugeführten Fluids.

Die brennerspezifischen Rauchgaskanäle sind jeweils zweckmäßigerweise außerhalb des Ofens angeordnet und jeweils insbesondere an einem brennerspezifischen Ofenauslass derart mit dem Innenraum des Ofens verbunden, dass Rauchgas in vorgegebenen, gewünschten Mengen aus dem Ofen entnommen werden kann. Diese brennerspezifischen Ofenauslässe sind in der Ofenwand jeweils insbesondere nahe dem jeweiligen Benner angeordnet, d.h. ein Abstand zwischen einem Brenner und dem jeweiligen brennerspezifischen Ofenauslass ist insbesondere geringer als ein Abstand zwischen zwei Brennern. Von dem jeweiligen brennerspezifischen Ofenauslass aus verläuft der entsprechende brennerspezifische Rauchgaskanal somit insbesondere in unmittelbarer Näher zu dem jeweiligen Brenner.

Das Fluid in den Fluideinheiten wird somit in den jeweiligen brennerspezifischen Rauchgaskanälen jeweils durch die rekuperative Wärmerückgewinnung erwärmt, unmittelbar bevor es den jeweiligen Brenner erreicht und dort zu dem Rauchgas verbrannt wird. Somit werden lange Leitungen von einem Wärmeübertrager zu dem Brenner vermieden, wodurch eine unerwünschte Abkühlung und somit unerwünschte Wärmeverluste des durch den Wärmeübertrager vorgewärmten Fluids vermieden werden kann.

Im Gegensatz zu herkömmlichen Wärmerückgewinnungsmethoden ist es insbesondere nicht nötig, dass mittels des Rauchgases zunächst ein Regeneratorbett aufgewärmt werden muss, um Wärme zwischen zu speichern. Stattdessen kann in den brennerspezifischen Rauchgaskanälen die durch die rekuperative Wärmerückgewinnung genutzte thermische Energie des Rauchgases direkt ohne Zwischenspeicherung auf das den Brennern zugeführte Fluid weiterverwendet werden. Die Erfindung ermöglicht somit eine Wärmerückgewinnung aus von Brennern erzeugtem Rauchgas mit hoher Effizienz.

Ferner bietet die Erfindung besonders Vorteile, wenn eine Vielzahl von Brennern verwendet wird, da durch die Erfindung eine individuelle Brennerregelung sowie eine individuelle, brennerspezifische rekuperative Wärmerückgewinnung für jeden einzelnen der Brenner ermöglicht wird. Somit lassen sich beliebige, zweckmäßige Verteilungen der Feuerungsleistungen der einzelnen Brenner einstellen, wodurch insbesondere gezielt Einfluss auf eine Qualität von in dem Ofen bearbeiteten Werkstücken bzw. Materialien genommen werden kann.

Mit Hilfe der einzelnen Fluideinheiten kann jedem Brenner der Vielzahl von Brennern insbesondere eine individuelle, brennerspezifische Menge des Fluids zugeführt werden. Somit können die den einzelnen Brennern zugeführten Fluidmengen und die in den einzelnen Brennern durchgeführten Verbrennungen individuell und unabhängig von den restlichen Brennern geregelt bzw. gesteuert werden. Durch die brennerspezifischen Rauchgaskanäle kann ferner für jeden Brenner insbesondere eine individuelle, brennerspezifische Menge des Rauchgases aus dem Ofen abgeführt werden. Somit kann bei einer Vielzahl von Brenner für jeden Brenner Rauchgas zur rekuperativen Wärmerückgewinnung individuell und unabhängig von den übrigen Brennern aus dem Ofen entnommen werden. Zweckmäßigerweise kann für jeden Brenner die jeweilige brennerspezifische Menge des Rauchgases derart gewählt werden, dass eine bestmögliche Erwärmung der dem jeweiligen Brenner zugeführten brennerspezifischen Menge des Fluids durch die rekuperative Wärmeübertragung ermöglicht wird.

Die Brenner können insbesondere an beliebigen, zweckmäßigen Stellen an dem Ofen angeordnet sein. Beispielsweise können alle Brenner "zentral" an derselben Seite des Ofens angeordnet sein oder insbesondere auch "dezentral" an verschiedenen Seiten des Ofens. Durch die Anordnung der brennerspezifischen Rauchgaskanäle in unmittelbarer Nähe zu dem jeweiligen Brenner wird eine effektive Wärmerückgewinnung für jeden einzelnen der Brenner ermöglicht, unabhängig von dessen Position an dem Ofen. Insbesondere sind die einzelnen Elemente des Wärmerückgewinnungssystem außerhalb des Ofens angeordnet, wodurch es zweckmäßigerweise ermöglicht wird, die einzelnen Brenner inklusive der jeweils zugehörigen Elemente zur Wärmerückgewinnung von dem Ofen zu isolieren und somit insbesondere zugänglich für Wartungsabreiten zu machen. Wartung, Reinigung und Reparaturen der einzelnen Elemente des Wärmerückgewinnungssystems sind somit auf konstruktiv und finanziell einfache Weise möglich.

Gemäß einer vorteilhaften Ausgestaltung ist für jeden Brenner jeweils eine brennerspezifische Brennstoffzufuhr vorgesehen, die dazu eingerichtet ist, der Fluideinheit des jeweiligen Brenners einen Brennstoff zuzuführen, insbesondere eine brennerspezifische Menge des Brennstoffs. Zweckmäßigerweise führen die Fluidleitungen den jeweiligen Brennern jeweils den Brennstoff zu. Die Brenner sind insbesondere dazu eingerichtet, den Brennstoff Fluid zu einem Rauchgas zu verbrennen. Beispielsweise wird Erdgas und/oder Methan als Brennstoff verwendet. Insbesondere ist jedem Brenner somit eine individuelle Brennstoffmenge zuführbar, unabhängig von den übrigen Brennern. Die einzelnen brennerspezifischen Brennstoffzufuhren sind zweckmäßigerweise jeweils außerhalb der einzelnen brennerspezifischen Rauchgaskanäle angeordnet, wodurch eine einfache Wartung, Reinigung und Reparatur ermöglicht wird.

Gemäß einer besonders vorteilhaften Ausgestaltung ist eine Brennstoffeinheit zur Bereitstellung des Brennstoffs vorgesehen. Jede brennerspezifische Brennstoffzufuhr umfasst vorteilhafterweise jeweils eine Leitung von der Brennstoffeinheit zu der jeweiligen Fluideinheit des jeweiligen Brenners und ferner vorzugsweise eine (erste) Ventileinheit in dieser Leitung. Insbesondere kann mit Hilfe der jeweiligen Ventileinheiten die für jeden Brenner entnommene brennerspezifische Menge an Brennstoff individuell eingestellt bzw. geregelt werden. Insbesondere sind die Ventileinheiten und die Leitungen der einzelnen brennerspezifischen Brennstoffzufuhren jeweils außerhalb der brennerspezifischen Rauchgaskanäle angeordnet, um Wartung, Reinigung und Reparatur auf einfache Weise zu ermöglichen. Die Leitungen sind jeweils insbesondere aus einem hitzebeständigen, hochtemperaturfesten Werkstoff hergestellt, beispielsweise Metall.

Die Brennstoffeinheit ist insbesondere für alle Brenner des Ofens gemeinsam vorgesehen und stellt den Brennstoff zweckmäßigerweise für alle Brenner gemeinsam bereit. Aus dieser gemeinsamen Brennstoffeinheit kann mit Hilfe der einzelnen brennerspezifischen Brennstoffzufuhren für jeden einzelnen Brenner individuell Brennstoff entnommen werden, insbesondere die jeweilige brennerspezifische Menge des Brennstoffs. Die Brennstoffeinheit kann insbesondere eine gemeinsame Brennstoffleitung umfassen, welche an einer oder mehreren Seiten des Ofens verläuft. Von dieser gemeinsamen Brennstoffleitung zweigen insbesondere die Leitungen der einzelnen brennerspezifischen Brennstoffzufuhren ab. Ferner kann die Brennstoffeinheit beispielsweise eine oder mehrere Pumpen und/oder Gebläse sowie insbesondere einen Tank zum Speichern des Brennstoffs umfassen.

Vorteilhafterweise gehen die einzelnen brennerspezifischen Rauchgaskanäle in einen gemeinsamen Rauchgaskanal über. Dieser gemeinsame Rauchgaskanal ist insbesondere dazu eingerichtet, das abgeführte Rauchgas der einzelnen brennerspezifischen Rauchgaskanäle zu einem gesammelten Rauchgasstrom zu sammeln. Beispielsweise können die brennerspezifischen Rauchgaskanäle jeweils als einzelne individuelle Bauteile gefertigt und jeweils mit dem gemeinsamen Rauchgaskanal verbunden sein, beispielsweise über eine Schweißverbindung. Insbesondere ist es ebenfalls denkbar, dass die brennerspezifischen Rauchgaskanäle und der gemeinsame Rauchgaskanal als ein Bauteil bzw. eine bauliche Einheit gefertigt werden. Insbesondere kann in dem gemeinsamen Rauchgaskanal eine Pumpe und/oder Gebläse vorgesehen sein oder der gemeinsame Rauchgaskanal kann mit derartigen Elementen verbunden sein.

Vorteilhafterweise ist eine Rezirkulationseinheit vorgesehen, die dazu eingerichtet ist, Rauchgas aus dem gemeinsamen Rauchgaskanal bzw. aus dem gesammelten Rauchgasstrom als rezirkuliertes Rauchgas zu entnehmen. Insbesondere wird somit in den brennerspezifischen Rauchgaskanälen zunächst thermische Energie aus dem abgeführten Rauchgas entnommen und auf das Fluid in der jeweiligen Fluideinheit übertragen. Anschließend wird entsprechend abgekühltes Rauchgas von den brennerspezifischen Rauchgaskanälen dem gemeinsamen Rauchgaskanal zugeführt und von dort zumindest teilweise rezirkuliert. Die Rezirkulationseinheit kann insbesondere eine Rezirkulationsleitung umfassen, welche von dem gemeinsamen Rauchgaskanal abzweigt. Ferner kann die Rezirkulationseinheit zweckmäßigerweise eine (zweite) Ventileinheit, eine Pumpe und/oder ein Gebläse aufweisen, womit sich die entnommene Menge an rezirkuliertem Rauchgas einstellen bzw. regeln lässt. Restliches, nicht als rezirkuliertes Rauchgas entnommenes Rauchgas kann beispielsweise an die Atmosphäre abgegeben werden.

Vorzugsweise ist in dem gesammelten Rauchgaskanal und/oder in der Rezirkulationseinheit eine Wasserzufuhr und/oder ein Filter vorgesehen sind. Diese Wasserzufuhr ist vorzugsweise dazu eingerichtet, dem Rauchgas in dem gesammelten Rauchgaskanal und/oder dem rezirkulierten Rauchgas in der Rezirkulationseinheit Wasser und/oder Wasserdampf zuzuführen. Der Filter ist bevorzugt dazu eingerichtet, das Rauchgas in dem gesammelten Rauchgaskanal und/oder das rezirkulierte Rauchgas in der Rezirkulationsleitung zu filtern. Das rezirkulierte Rauchgas kann somit für eine spätere Verwendung aufbereitet bzw. angereichert werden.

Gemäß einer besonders vorteilhaften Ausgestaltung ist für jeden Brenner jeweils eine brennerspezifische Rauchgaszufuhr vorgesehen, die dazu eingerichtet ist, der Fluideinheit des jeweiligen Brenners rezirkuliertes Rauchgas aus der Rezirkulationseinheit zuzuführen, insbesondere eine brennerspezifische Menge des rezirkulierten Rauchgases. Insbesondere ist die Rezirkulationseinheit, analog zu der Brennstoffeinheit, für alle Brenner des Ofens gemeinsam vorgesehen und stellt rezirkuliertes Rauchgas zweckmäßigerweise für alle Brenner gemeinsam bereit. Aus dieser gemeinsamen Rezirkulationseinheit kann mit Hilfe der einzelnen brennerspezifischen Rauchgaszufuhren für jeden einzelnen Brenner individuell rezirkuliertes Rauchgas entnommen werden.

Vorteilhafterweise umfasst jede brennerspezifische Rauchgaszufuhr eine Leitung von der Rezirkulationseinheit zu der jeweiligen Fluideinheit des jeweiligen Brenners und eine Ventileinheit in dieser Leitung. Insbesondere sind die Ventileinheiten der einzelnen brennerspezifischen Rauchgaszufuhren jeweils außerhalb der brennerspezifischen Rauchgaskanäle und insbesondere außerhalb des gemeinsamen Rauchgaskanals angeordnet, um Wartung, Reinigung und Reparatur auf einfache Weise zu ermöglichen. Die Leitungen sind jeweils insbesondere aus einem hitzebeständigen Werkstoff hergestellt, beispielsweise Metall. Mit Hilfe der Ventileinheiten kann insbesondere die für den jeweiligen Brenner entnommene brennerspezifische Menge an rezirkuliertem Rauchgas individuell eingestellt bzw. geregelt werden.

Insbesondere können die brennerspezifischen Rauchgaszufuhren analog zu den einzelnen brennerspezifischen Brennstoffzufuhren ausgestaltet sein. Die Rezirkulationseinheit kann, analog zu der Brennstoffeinheit, insbesondere eine gemeinsame Rezirkulationsleitung umfassen, welche beispielsweise an einer oder mehreren Seiten des Ofens verläuft. Von dieser gemeinsamen Rezirkulationsleitung zweigen insbesondere die Leitungen der einzelnen brennerspezifischen Rauchgaszufuhren ab. Beispielsweise können die Brennstoffeinheit und die Rezirkulationseinheit, insbesondere die entsprechende gemeinsame Brennstoffleitung und die gemeinsame Rezirkulationseinheit parallel zueinander an einer oder mehreren Seiten des Ofens verlaufen.

Bevorzugt verläuft jede brennerspezifische Rauchgaszufuhr, insbesondere die jeweilige Leitung jeder brennerspezifischen Rauchgaszufuhr, zumindest teilweise in dem brennerspezifischen Rauchgaskanal des jeweiligen Brenners, so dass thermische Energie des abgeführten Rauchgases in dem jeweiligen brennerspezifischen Rauchgaskanal auf das rezirkulierte Rauchgas in der jeweiligen brennerspezifischen Rauchgaszufuhr übertragbar ist. Somit bilden der jeweilige brennerspezifische Rauchgaskanal und die jeweilige brennerspezifische Rauchgaszufuhr eines Brenners insbesondere einen Wärmeübertrager zum Erwärmen bzw. Vorwärmen des dem jeweiligen Benner zugeführten rezirkulierten Rauchgases. Insbesondere werden lange Leitungen zum Transport des auf diese Weise vorgewärmten rezirkulierten Rauchgases vermieden, um unerwünschte Wärmeverluste des vorgewärmten rezirkulierten Rauchgases zu vermeiden.

In den brennerspezifischen Rauchgaskanälen ist dabei die jeweilige brennerspezifische Rauchgaszufuhr vorzugsweise stromabwärts der jeweiligen Fluideinheit angeordnet. Dem abgeführten Rauchgas wird somit zunächst thermische Energie entnommen, um das Fluid in der Fluideinheit zu erwärmen. Anschließend wird dem abgeführten Rauchgas weitere thermische Energie entnommen, um das rezirkulierte Rauchgas zu erwärmen.

Gemäß einer besonders vorteilhaften Ausgestaltung der Erfindung wird in dem Wärmerückgewinnungssystem eine Reformierungsreaktion durchgeführt, vorzugsweise eine Reformierungsreaktion des Brennstoffs und des rezirkulierten Rauchgases als Reformierungsedukte zu einem Synthesegas. Zu diesem Zweck ist die Fluideinheit jedes Brenners vorteilhafterweise jeweils als eine Reformereinheit ausgebildet, die dazu eingerichtet ist, mit Hilfe der aus dem abgeführten Rauchgas in dem jeweiligen brennerspezifischen Rauchgaskanal des jeweiligen Brenners übertragenen thermischen Energie eine Reformierungsreaktion des von der jeweiligen brennerspezifischen Brennstoffzufuhr zugeführten Brennstoffs und des von der jeweiligen brennerspezifischen Rauchgaszufuhr zugeführten rezirkulierten Rauchgases zumindest teilweise zu einem Synthesegas durchzuführen und das Synthesegas dem jeweiligen Brenner zuzuführen.

In den einzelnen als Reformereinheiten ausgebildeten Fluideinheiten wird somit thermische Energie auf ein Fluid übertragen, welches ein Gemisch aus Brennstoff und rezirkuliertem Rauchgas ist. Insbesondere fungieren die Fluid- bzw. Reformereinheiten in diesem Fall jeweils sowohl als ein Wärmeübertrager zum Erwärmen des Fluids, also dem Gemisch aus Brennstoff und rezirkuliertem Rauchgas, als auch als Reformer, um den erwärmten Brennstoff und das erwärmte rezirkulierte Rauchgas als Reformierungsedukte zumindest teilweise zu einem Synthesegas umzuwandeln. Zweckmäßigerweise fungieren die Fluid- bzw. Reformereinheiten auch als ein Überhitzer. Besonders vorteilhaft stellen die Fluid- bzw. Reformereinheiten somit jeweils eine Kombination aus einem Überhitzer und einem Reformer dar.

Besonders vorteilhaft wird somit thermische Energie des abgeführten Rauchgases durch eine rekuperative Wärmerückgewinnung in den einzelnen Fluid- bzw. Reformereinheiten auf Reformierungsedukte übertragen. Das Rauchgas wird ferner zumindest teilweise als rezirkuliertes Rauchgas und als Reformierungsedukt den Reformereinheiten zusammen mit dem Brennstoff zugeführt. In den Reformereinheiten wird mit Hilfe der aus dem Rauchgas übertragenen thermischen Energie jeweils eine Reformierungsreaktion des Brennstoffs und des rezirkulierten Rauchgases zumindest teilweise zu dem Synthesegas durchgeführt. Das in den einzelnen Reformereinheiten erzeugte Synthesegas wird jeweils dem jeweiligen Brenner zugeführt und von diesem Brenner zu dem Rauchgas verbrannt.

Unter Synthesegas ist zweckmäßigerweise ein Gasgemisch aus Wasserstoff und Kohlenmonoxid zu verstehen. Es versteht sich, dass dieses Gasgemisch noch andere Stoffe aufweisen kann, Wasserstoff und Kohlenmonoxid stellen jedoch insbesondere den größten Stoffanteil dar. Das rezirkulierte Rauchgas enthält unter anderem insbesondere Kohlendioxid sowie Wasserdampf, welche als Edukte für die Reformierungsreaktion fungieren. Im Zuge der Reformierungsreaktion reagieren Methan, Kohlendioxid und Wasser zu Kohlenmonoxid und Wasserstoff. Bevorzugt wird daher Erdgas und/oder Methan als Brennstoff verwendet.

Die Reformierungsreaktion kann katalytisch oder auch nicht katalytisch durchgeführt werden und ist eine endotherme chemische Reaktion. Die für die Reaktion benötigte Reaktionswärme wird direkt dem abgeführten Rauchgas entzogen. Somit kann aus dem Rauchgas zurückgewonnene Energie direkt verwendet werden und in dem Brennstoff gespeichert werden, indem die chemisch gebundene Energie des Brennstoffs durch die endotherme Reformierungsreaktion erhöht wird. Dies ist gleichbedeutend mit einer Erhöhung des Brennstoff-Heizwertes. Durch eine derartige Erhöhung des Brennstoff-Heizwertes kann wiederum die Menge an unterfeuertem Brennstoff reduziert werden, wodurch der Brennstoffverbrauch der Brenner verringert werden kann. In gleicher Weise kann eine für die Verbrennung benötigte Sauerstoff- bzw. Oxidationsmittelmenge reduziert werden. Verbunden damit ergibt sich insbesondere eine reduzierte Rauchgasmenge. Umweltbelastungen und Emissionen, z.B. Kohlenstoffdioxid- und Stickoxidausstoß, können verringert werden. Betriebskosten und elektrischer Verbrauch zum Betreiben der Vielzahl der Brenner können reduziert und die Effizienz der Brenner kann erhöht werden.

Mit Hilfe der endothermen Reformierungsreaktion kann dem Rauchgas deutlich mehr Wärme entzogen werden, als es bei herkömmlichen Wärmerückgewinnungsmethoden der Fall ist, insbesondere bei zyklisch betriebenen Regeneratoren. Die durch die rekuperative Wärmerückgewinnung genutzte thermische Energie des Rauchgases kann direkt ohne Zwischenspeicherung für die Erzeugung des Synthesegases weiterverwendet werden.

Die Erfindung ermöglicht somit eine Wärmerückgewinnung aus von einem Brenner erzeugten Rauchgas und Erzeugung von Synthesegas mit Hilfe dieser rückgewonnenen Wärme mit hoher Effizienz. Weiterhin kann die Menge an eingesetztem Material reduziert werden, da nicht mehrere Regeneratorbetten und entsprechende zusätzliche Leitungen, Ventile, usw. benötigt werden.

Die Reformereinheiten sind jeweils insbesondere als kontinuierlich betriebene Reformer ausgebildet, d.h. die Reformer werden jeweils kontinuierlich von rezirkuliertem Rauchgas und Brennstoff durchströmt und produzieren kontinuierlich Synthesegas. Ferner können die Reformereinheiten in den jeweiligen brennerspezifischen Rauchgaskanälen zu diesem Zweck kontinuierlich von dem abgeführten Rauchgas umströmt werden, um kontinuierlich thermische Energie auf die Reformereinheiten zu übertragen.

Gemäß einer bevorzugten Ausgestaltung ist für jeden Brenner jeweils eine brennerspezifische Oxidationsmittelzufuhr vorgesehen, um dem jeweiligen Brenner ein Oxidationsmittel zuzuführen, insbesondere eine brennerspezifische Menge des Oxidationsmittels. Das Oxidationsmittel wird von den Brennern jeweils zusammen mit dem Fluid, insbesondere mit dem Brennstoff bzw. dem Synthesegas, zu dem Rauchgas verbrannt. Insbesondere wird Luft und/oder Sauerstoff als Oxidationsmittel verwendet. Analog zu dem abgeführten Rauchgas, dem Brennstoff und dem rezirkulierten Rauchgas kann auch das Oxidationsmittel individuell für jeden Brenner eingestellt bzw. geregelt werden, zweckmäßigerweise unabhängig von den übrigen Brennern.

Vorteilhafterweise verläuft die brennerspezifische Oxidationsmittelzufuhr jedes Brenners zumindest teilweise in dem jeweiligen brennerspezifischen Rauchgaskanal des jeweiligen Brenners, so dass thermische Energie des abgeführten Rauchgases in dem brennerspezifischen Rauchgaskanal auf das Oxidationsmittel in der brennerspezifischen Oxidationsmittelzufuhr übertragbar ist. Insbesondere bilden somit der jeweilige brennerspezifische Rauchgaskanal und die jeweilige brennerspezifische Oxidationsmittelzufuhr eines Brenners einen Wärmeübertrager zum Erwärmen bzw. Vorwärmen des dem jeweiligen Benners zugeführten Oxidationsmittels. Lange Leitungen zum Transport des vorgewärmten Oxidationsmittels werden insbesondere vermieden, um unerwünschte Wärmeverluste zu vermeiden.

Vorzugsweise ist in den brennerspezifischen Rauchgaskanälen die jeweilige brennerspezifische Oxidationsmittelzufuhr stromabwärts der jeweiligen Fluideinheit und ferner vorzugsweise stromabwärts der jeweiligen brennerspezifischen Rauchgaszufuhr angeordnet. Somit wird dem abgeführten Rauchgas zweckmäßigerweise zunächst thermische Energie entnommen, um das Fluid in der Fluideinheit zu erwärmen, und anschließend um insbesondere das rezirkulierte Rauchgas zu erwärmen. Anschließend wird dem abgeführten Rauchgas zweckmäßigerweise weitere thermische Energie entnommen, um das Oxidationsmittel zu erwärmen.

Vorzugsweise ist eine Oxidationsmitteleinheit zur Bereitstellung des Oxidationsmittels vorgesehen. Die Oxidationsmitteleinheit ist, insbesondere analog zu der Rezirkulationseinheit und der Brennstoffeinheit, zweckmäßigerweise für alle Brenner des Ofens gemeinsam vorgesehen und stellt das Oxidationsmittel insbesondere für alle Brenner gemeinsam bereit. Mit Hilfe der einzelnen brennerspezifischen Oxidationsmittelzufuhren können zweckmäßigerweise für jeden einzelnen Brenner individuelle Mengen an Oxidationsmittel aus der gemeinsamen Oxidationsmitteleinheit entnommen werden.

Bevorzugt umfasst jede brennerspezifische Oxidationsmittelzufuhr jeweils eine Leitung von der Oxidationsmitteleinheit zu dem jeweiligen Brenner und eine (dritte) Ventileinheit in dieser Leitung. Insbesondere sind diese Leitungen jeweils zumindest teilweise in dem jeweiligen brennerspezifischen Rauchgaskanal angeordnet, um thermische Energie auf das Oxidationsmittel zu übertragen. Die Leitungen sind jeweils insbesondere aus einem hitzebeständigen Werkstoff hergestellt, beispielsweise Metall. Die Ventileinheiten sind jeweils insbesondere außerhalb der brennerspezifischen Rauchgaskanäle und insbesondere außerhalb des gemeinsamen Rauchgaskanals angeordnet, um Wartung, Reinigung und Reparatur zu vereinfachen. Die brennerspezifischen Mengen des Oxidationsmittels können insbesondere mit Hilfe dieser Ventileinheiten für jeden jeweiligen Brenner individuell eingestellt bzw. geregelt werden.

Die brennerspezifischen Oxidationsmittelzufuhren können insbesondere analog zu den brennerspezifischen Rauchgaszufuhren und den brennerspezifischen Brennstoffzufuhren ausgestaltet sein. Die Oxidationseinheit kann zweckmäßigerweise, analog zu der Brennstoffeinheit und der Rezirkulationseinheit, eine gemeinsame Oxidationsleitung umfassen, welche insbesondere an einer oder mehreren Seiten des Ofens verläuft und von welcher aus insbesondere die Leitungen der einzelnen brennerspezifischen Oxidationsmittelzufuhren abzweigen. Vorzugsweise verlaufen die Oxidationseinheit, die Brennstoffeinheit und die Rezirkulationseinheit, insbesondere die entsprechende gemeinsame Oxidationsleitung, die gemeinsame Brennstoffleitung und die gemeinsame Rezirkulationseinheit parallel zueinander an einer oder mehreren Seiten des Ofens. Ferner kann die Oxidationseinheit zweckmäßigerweise eine oder mehrere Pumpen und/oder Gebläse und/oder einen Tank zum Speichern des Oxidationsmittels umfassen.

Vorteilhafterweise ist in den brennerspezifischen Rauchgaskanälen jeweils mindestens ein Umlenkelement vorgesehen, das dazu eingerichtet ist, das abgeführte Rauchgas in dem jeweiligen brennerspezifischen Rauchgaskanal derart umzulenken, dass das Rauchgas mehrmals um die jeweilige Fluideinheit herum strömt. Beispielsweise können die Umlenkelemente als Umlenkbleche ausgebildet sein, welche insbesondere senkrecht zu der jeweiligen Fluideinheit orientiert sind.

Vorzugsweise ist in jedem brennerspezifischen Rauchgaskanal jeweils ein Klappenelement vorgesehen, mittels welchem die brennerspezifische Menge an Rauchgas aus dem Ofen abführbar ist. Insbesondere sind diese Klappenelemente jeweils an einem Ofenauslass angeordnet, an welchem auch der jeweilige brennerspezifische Rauchgaskanal mit dem Ofen verbunden ist. Die Klappenelemente können jeweils insbesondere als eine dynamisch steuerbare Klappe ausgebildet sein, mittels welcher der jeweilige Ofenauslass verschlossen und dynamisch geöffnet werden kann, um insbesondere die entnommene Rauchgasmenge einzustellen bzw. zu regeln. Alternativ dazu kann die Klappe bzw. das Klappenelement zur Regelung des Rauchgasstroms auch jeweils stromab der jeweiligen Oxidationseinheit installiert und zusätzlich dazu eine Absperreinrichtung am jeweiligen Ofenauslass im entsprechenden brennerspezifischen Rauchgaskanal positioniert sein.

Bevorzugt weisen die Fluideinheiten jeweils mindestens ein Rohr auf, insbesondere jeweils mindestens ein Geradrohr, aus einem hochtemperaturfesten Werkstoff, insbesondere aus Keramik. Die Anzahl der Rohre pro Fluideinheit kann insbesondere abhängig vom jeweiligen Auslegungsfall gewählt werden.

Das Wärmerückgewinnungssystem kann beispielsweise für einen Glasofen zum Schmelzen von Glas ausgebildet. Durch das Wärmerückgewinnungssystem kann der Ofen effizient betrieben werden. Betriebskosten, elektrischer Verbrauch, Umweltbelastungen und Emissionen beim Betrieb des Ofens können reduziert werden. Besonders vorteilhaft ist das Wärmerückgewinnungssystem dazu eingerichtet, ein Verfahren zur Wärmerückgewinnung aus einem von einem Brenner erzeugten Rauchgas durchzuführen, wie es in der Patentanmeldung EP 3 336 430 A1 der Anmelderin offenbart wird, auf welche an dieser Stelle vollumfänglich verwiesen wird und deren Offenbarung auch zum Inhalt der vorliegenden Anmeldung gemacht wird.

Diese Patentanmeldung betrifft ein Verfahren sowie ein Wärmerückgewinnungssystem, wobei thermische Energie des Rauchgases durch eine rekuperative Wärmerückgewinnung auf Reformierungsedukte unter anderem in einer Reformereinheit übertragen wird. Das Rauchgas wird zumindest teilweise als rezirkuliertes Rauchgas und als Reformierungsedukt der Reformereinheit zugeführt. Zusammen mit dem rezirkulierten Rauchgas wird der Reformereinheit ein Brennstoff als Reformierungsedukt zugeführt. In der Reformereinheit wird mit Hilfe der aus dem Rauchgas übertragenen thermischen Energie eine Reformierungsreaktion des Brennstoffs und des rezirkulierten Rauchgases zumindest teilweise zu einem Synthesegas durchgeführt. Das in der Reformereinheit erzeugte Synthesegas wird dem Brenner zugeführt und von dem Brenner zu dem Rauchgas verbrannt.

Das vorliegende Wärmerückgewinnungssystem stellt gemäß einer besonders vorteilhaften Ausgestaltung der vorliegenden Erfindung eine Weiterentwicklung des in der EP 3 336 430 A1 gezeigten Wärmerückgewinnungssystems dar und ferner eine Möglichkeit, um das in der EP 3 336 430 A1 offenbarte Verfahren effektiv durchzuführen, insbesondere bei Öfen mit einer Vielzahl von Brennern, welche insbesondere dezentral an verschiedene Seiten des Ofens angeordnet sein können.

Die brennerspezifischen Rauchgaskanäle stellen eine besonders effektive Möglichkeit dar, um für jeden einzelnen Brenner individuell das Oxidationsmittel und das rezirkulierte Rauchgas vorzuwärmen und ferner die Reformierungsreaktion des vorgewärmten rezirkulierten Rauchgases und des Brennstoffs durchzuführen.

Die Vorwärmung dieser einzelnen Medien erfolgt dabei jeweils in unmittelbarer Nähe zum jeweiligen Brenner, wodurch keine langen Leitungen zum Transport der jeweiligen vorgewärmten Medien benötigt werden und unerwünschte Wärmeverluste verhindert werden.

Ferner können die brennerspezifischen Mengen des abgeführten Rauchgases, des Brennstoffs, des rezirkulierten Rauchgases und des Oxidationsmittels für jeden Brenner individuell, präzise eingestellt und geregelt werden, insbesondere durch die jeweiligen Ventileinheiten bzw. Klappenelementen. Insbesondere können somit die Wärmerückgewinnung und die Reformierungsreaktion für jeden einzelnen Brenner individuell geregelt werden und eine individuelle Brennerregelung ermöglicht werden.

Sämtliche Ventileinheiten sind insbesondere außerhalb der brennerspezifischen Rauchgaskanäle und des gemeinsamen Rauchgaskanals angeordnet, insbesondere jeweils an kalten Eintrittsseiten des Wärmerückgewinnungssystems, was einfache Wartung, Reparatur und Reinigung ermöglicht. Ferner wird es ermöglicht die einzelnen Brenner insbesondere inklusive der in den jeweiligen brennerspezifischen Rauchgaskanälen angeordneten Wärmeübertrager von dem Ofen zu isolieren und zugänglich für Wartungs-, Reparatur- und Reinigungsarbeiten zu machen.

Weitere Vorteile und Ausgestaltungen der Erfindung ergeben sich aus der Beschreibung und der beiliegenden Zeichnung.

Die Erfindung ist anhand von Ausführungsbeispielen in der Zeichnung schematisch dargestellt und wird im Folgenden unter Bezugnahme auf die Zeichnung beschrieben.

### Kurze Beschreibung der Zeichnungen

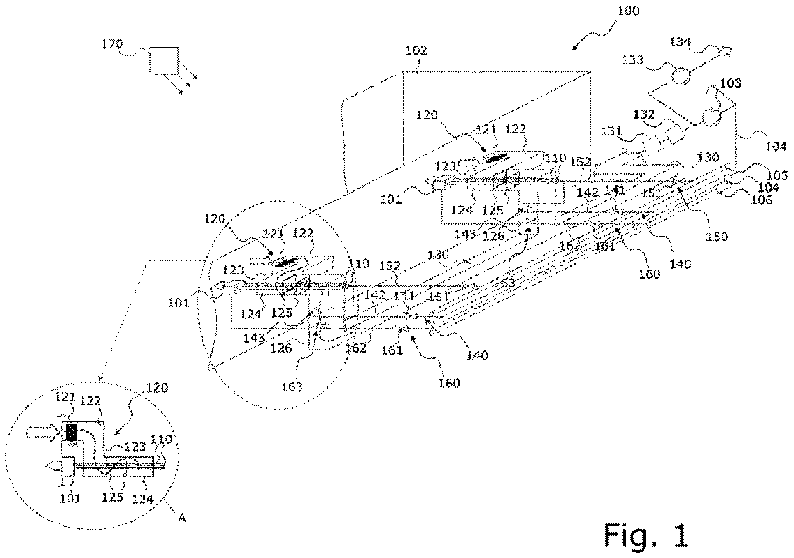

- Figur 1: zeigt schematisch eine bevorzugte Ausgestaltung eines erfindungsgemäßen Wärmerückgewinnungssystems.

### Ausführungsform(en) der Erfindung

In Figur 1 ist eine bevorzugte Ausgestaltung eines erfindungsgemäßen Wärmerückgewinnungssystems schematisch dargestellt und mit 100 bezeichnet.

Das Wärmerückgewinnungssystem 100 ist für einen Ofen 102 vorgesehen, beispielsweise für einen Glasofen. Eine Vielzahl von Brennern 101 ist zum Befeuern des Ofens 102 vorgesehen. In Figur 1 sind beispielhaft zwei Brenner 102 dargestellt, jedoch versteht sich, dass der Ofen noch weitere Brenner aufweisen kann, welche der Übersichtlichkeit halber in Figur 1 nicht dargestellt sind. Beispielsweise weist der Ofen 102 an mehreren Seiten eine Vielzahl von Brennern 102 auf, insbesondere mindestens an zwei gegenüberliegenden Seiten.

Für die einzelnen Brenner 101 sind in dem Wärmerückgewinnungssystem 100 jeweils spezielle gleiche bzw. baugleiche Elemente vorgesehen, welche in Figur 1 jeweils mit identischen Bezugszeichen versehen sind.

Für jeden Brenner 101 ist jeweils eine Fluideinheit 110 vorgesehen ist um dem jeweiligen Brenner 101 ein Fluid zuzuführen, insbesondere eine brennerspezifische Menge des Fluids. Das zugeführte Fluid wird von den Brennern 101 jeweils zu Rauchgas verbrannt. Im vorliegenden Beispiel sind die Fluideinheiten 110 jeweils als Reformereinheiten zum Durchführen einer Reformierungsreaktion ausgebildet, wie weiter unten noch erläutert wird.

Das Wärmerückgewinnungssystem 100 ist zur Wärmerückgewinnung aus von den Brennern 101 erzeugtem Rauchgas vorgesehen. Zu diesem Zweck ist für jeden Brenner 101 jeweils ein brennerspezifischer Rauchgaskanal 120 vorgesehen, der dazu eingerichtet ist, Rauchgas aus dem Ofen 102 abzuführen, insbesondere eine brennerspezifische Menge des Rauchgases.

Die brennerspezifischen Rauchgaskanäle 120 sind jeweils an einem Ofenauslass mit dem Innenraum des Ofens verbunden 102. An diesen Ofenauslässen ist jeweils ein Klappenelement 121 in Form einer dynamisch steuerbaren Klappe angeordnet, um die aus dem Ofen 102 entnommene Rauchgasmenge einzustellen bzw. zu regeln.

Die brennerspezifischen Rauchgaskanäle 120 weisen jeweils mehrere Abschnitte auf. Ein erster Abschnitt 122 verläuft an die Klappe 121 anschließend senkrecht oder zumindest im Wesentlichen senkrecht zu der Ofenwand. Ein zweiter Abschnitt 123 verläuft parallel oder zumindest im Wesentlichen parallel zu der Ofenwand, ein dritter Abschnitt 124 verläuft erneut senkrecht oder zumindest im Wesentlichen senkrecht zu der Ofenwand und ein vierter Abschnitt 126 verläuft erneut parallel oder zumindest im Wesentlichen parallel zu der Ofenwand.

Die Fluideinheit 110 jedes Brenners 101 verläuft jeweils zumindest teilweise in dem jeweiligen brennerspezifischen Rauchgaskanal 120. Wie in Figur 1 gezeigt verlaufen die Fluideinheiten 110 jeweils zumindest teilweise in den dritten Abschnitten 124 des jeweiligen brennerspezifischen Rauchgaskanals 120. Thermische Energie des abgeführten Rauchgases ist somit in den brennerspezifischen Rauchgaskanälen 120 jeweils auf ein Fluid in der jeweiligen Fluideinheit 110 übertragbar.

In diesen dritten Abschnitten 124 sind jeweils Umlenkelemente 125 in Form von Umlenkblechen angeordnet, um das abgeführte Rauchgas in dem jeweiligen brennerspezifischen Rauchgaskanal 120 derart umzulenken, dass das Rauchgas mehrmals um die jeweilige Fluideinheit 110 herum strömt. Das abgeführte Rauchgas ist in Figur 1 als gestrichelte Linie dargestellt.

In Figur 1 ist mit dem Großbuchstaben A bezeichnet eine Draufsicht auf einen Ausschnitt des Wärmerückgewinnungssystems 100 dargestellt, welches einen der Brenner 101 sowie den zugehörigen brennerspezifischen Rauchgaskanal 120 zeigt. In dieser Draufsicht A ist zu erkennen, wie das abgeführte Rauchgas in dem dritten Abschnitt 124 durch die Umlenkbleche 125 mehrmals um die jeweilige Fluideinheit 110 herum strömt.

Nach Entnahme aus dem Ofen 102 kann das Rauchgas in den ersten und zweiten Abschnitten 121, 122 beispielsweise eine Temperatur von etwa 1500°C besitzen. Nachdem dem Rauchgas thermische Energie zum Erwärmen des Fluids in den Fluideinheiten 110 entzogen wurde, kann das Rauchgas noch eine Temperatur von beispielweise ca. 513°C besitzen.

Wie weiter unten noch erläutert wird, wird dem Rauchgas in dem vierten Abschnitt 126 weitere thermische Energie entzogen um weitere Fluide zu erwärmen. Am Ende des vierten Abschnitts 126 kann das Rauchgas eine Temperatur von beispielsweise ca. 389°C besitzen.

Jeder brennerspezifische Rauchgaskanal 120 geht nach seinem vierten Abschnitt 126 in einen gemeinsamen Rauchgaskanal 130 über. Das von den einzelnen brennerspezifischen Rauchgaskanälen 120 aus dem Ofen 102 abgeführte Abgas wird somit in dem gemeinsamen Rauchgaskanal 130 gesammelt.

Ferner sind in dem gemeinsamen Rauchgaskanal 130 eine Wasserzufuhr 131, ein Filter 132 und ein Gebläse 133 vorgesehen. Die Wasserzufuhr 131 ist dazu eingerichtet, dem Rauchgas in dem gesammelten Rauchgaskanal 130 Wasserdampf zuzuführen und die Temperatur weiter zu senken. Der Filter ist dazu eingerichtet, das Rauchgas in dem gesammelten Rauchgaskanal 130 anschließend zu filtern. Nach dem Filter 132 kann das das mit Wasserdampf angereicherte und gefilterte Rauchgas beispielsweise eine Temperatur von ca. 140°C besitzen.

Über einen Kamin 134 kann Rauchgas von dem gemeinsamen Rauchgaskanal 130 an die Atmosphäre abgegeben werden. Dieses an die Atmosphäre abgegebene Rauchgas kann beispielsweise eine Temperatur von ca. 156°C besitzen, abhängig vom Gegendruck im Kamin 134 und der damit verbundenen Gebläseleistung des Gebläses 133.

Eine Rezirkulationseinheit 104 ist dazu eingerichtet, Rauchgas aus dem gemeinsamen Rauchgaskanal 130 als rezirkuliertes Rauchgas zu entnehmen. Die Rezirkulationseinheit 104 ist beispielsweise als eine gemeinsame Rezirkulationsleitung ausgebildet, welche von dem gemeinsamen Rauchgaskanal 130 abzweigt. Diese Rezirkulationsleitung 104 bzw. zumindest ein Teil der Rezirkulationsleitung 104 verläuft parallel oder zumindest im Wesentlichen parallel zu der Ofenwand.

In der Rezirkulationsleitung 104 ist insbesondere eine ein Gebläse 103 angeordnet. Stromabwärts des Gebläses 103 besitzt das mit Wasserdampf angereicherte und gefilterte, rezirkulierte Rauchgas beispielsweise eine Temperatur von ca. 231°C, abhängig vom Gegendruck in der Rezirkulationsleitung und der damit verbundenen Gebläseleistung des Gebläses 103.

Für jeden Brenner 101 ist eine brennerspezifische Rauchgaszufuhr 140 vorgesehen, die dazu eingerichtet ist, der Fluideinheit 110 des jeweiligen Brenners 101 rezirkuliertes Rauchgas aus der Rezirkulationseinheit 104 zuzuführen, insbesondere eine brennerspezifische Menge des rezirkulierten Rauchgases.

Zu diesem Zweck umfassen die brennerspezifischen Rauchgaszufuhren 140 jeweils eine Leitung 142 von der Rezirkulationseinheit 104 zu der jeweiligen Fluideinheit 110 des jeweiligen Brenners 101 und eine Ventileinheit 141 in dieser Leitung 142.

Die Leitung 142 jeder brennerspezifischen Rauchgaszufuhr 140 verläuft zumindest teilweise in dem brennerspezifischen Rauchgaskanal 120 des jeweiligen Brenners 101. Zu diesem Zweck verläuft ein Abschnitt 143 der Leitung 142 jeder brennerspezifischen Rauchgaszufuhr 140 jeweils in dem vierten Abschnitt 126 des jeweiligen brennerspezifischen Rauchgaskanal 120.
Somit ist thermische Energie des abgeführten Rauchgases in dem jeweiligen brennerspezifischen Rauchgaskanal 120 auf das rezirkulierte Rauchgas in der jeweiligen brennerspezifischen Rauchgaszufuhr 140 übertragbar. Dieser Abschnitt 143 stellt somit insbesondere einen Wärmeübertrager dar.

Beispielsweise wird das rezirkulierte Rauchgas in den Leitungen 142 durch den Wärmeübertrager 143 auf eine Temperatur von ca. 400°C erwärmt. In dem vierten Abschnitt 126 des jeweiligen brennerspezifischen Rauchgaskanal 120 besitzt das abgeführte Rauchgas stromaufwärts des Wärmeübertragers 143 eine Temperatur von z.B. 513°C und stromabwärts des Wärmeübertragers 143 von z.B. etwa 483°C.

Ferner ist eine Brennstoffeinheit 105 vorgesehen, die analog zu der Rezirkulationseinheit 104 als eine gemeinsame Brennstoffleitung ausgebildet ist und zumindest teilweise parallel oder zumindest im Wesentlichen parallel zu der Ofenwand sowie zu der Rezirkulationsleitung 104 verläuft. In dieser Brennstoffleitung 105 wird insbesondere für alle Brenner 101 gemeinsam ein Brennstoff bereitgestellt, beispielsweise Erdgas. Es versteht sich, dass die Brennstoffeinheit 105 noch weitere Elemente aufweisen kann, beispielsweise einen Tank zum Speichern des Brennstoffs sowie ein Gebläse bzw. eine Pumpe.

Für jeden Brenner 101 ist eine brennerspezifische Brennstoffzufuhr 150 vorgesehen, die dazu eingerichtet ist, der Fluideinheit 110 des jeweiligen Brenners 101 Brennstoff aus der Brennstoffeinheit 105 zuzuführen, insbesondere eine brennerspezifische Menge des Brennstoffs.

Analog zu den brennerspezifischen Rauchgaszufuhren 140 umfassen die brennerspezifischen Brennstoffzufuhren 150 zu diesem Zweck jeweils eine Leitung 152 von der gemeinsamen Brennstoffleitung 105 zu der jeweiligen Fluideinheit 110 des jeweiligen Brenners 101 und eine Ventileinheit 151 in dieser Leitung 152.

Den Fluideinheiten 110 werden somit jeweils durch die jeweilige brennerspezifische Rauchgaszufuhr 140 rezirkuliertes Rauchgas und durch die jeweilige brennerspezifische Brennstoffzufuhr 150 Brennstoff zugeführt.

Wie oben erläutert besitzt das rezirkulierte Rauchgas in den Leitungen 142 stromabwärts der Fluideinheiten 110 eine Temperatur von ca. 400°C. Der Brennstoff besitzt in den Leitungen 152 stromabwärts der Fluideinheiten 110 eine Temperatur von ca. 20°C. Das den Fluideinheiten 110 zugeführte Fluid, also ein Gemisch aus rezirkuliertem Rauchgas und Brennstoff, besitzt beispielsweise eine Temperatur von 181°C.

Auf dieses Fluid, also auf dieses Gemisch aus rezirkuliertem Rauchgas und Brennstoff wird in den Fluideinheiten 110 jeweils thermische Energie aus dem abgeführten Rauchgas in dem jeweiligen brennerspezifischen Rauchgaskanal 120 übertragen.

Gemäß einer besonders bevorzugten Ausgestaltung sind die Fluideinheiten 110 jeweils als Reformereinheiten ausgebildet. In diesen Reformereinheiten 110 wird mit Hilfe der aus dem abgeführten Rauchgas in dem jeweiligen brennerspezifischen Rauchgaskanal 120 übertragenen thermischen Energie eine Reformierungsreaktion des von der jeweiligen brennerspezifischen Brennstoffzufuhr 150 zugeführten Brennstoffs und des von der jeweiligen brennerspezifischen Rauchgaszufuhr 140 zugeführten rezirkulierten Rauchgases zumindest teilweise zu einem Synthesegas durchgeführt und das Synthesegas wird dem jeweiligen Brenner 101 zugeführt.

Die Reformereinheiten 110 fungieren jeweils sowohl als Überhitzer, als auch als Reformer zum Durchführen der Reformierungsreaktion. Beispielsweise weisen die Reformereinheiten 110 jeweils eine Vielzahl von Geradrohren aus einem aus einem hochtemperaturfesten Werkstoff auf, z.B. Keramik.

Beispielsweis wird das Gemisch aus rezirkuliertem Rauchgas und Brennstoff in den Reformereinheiten 110 im Zuge der Funktion als Überhitzer zunächst auf Temperaturen zwischen 700°C und 800°C erwärmt. Das durch die anschließende Reformierungsreaktion erzeugte und den Brennern 102 zugeführte Synthesegas besitzt beispielsweise eine Temperatur von ca. 1200°C.

Das rezirkulierte Rauchgas enthält unter anderem insbesondere Kohlendioxid sowie Wasserdampf, welche als Edukte für die Reformierungsreaktion fungieren. Ferner fungiert Methan in dem Erdgas, also in dem Brennstoff, als Edukt für die Reformierungsreaktion. Im Zuge dieser Reformierungsreaktion reagieren Methan, Kohlendioxid und Wasser zu Kohlenmonoxid und Wasserstoff. Die für diese endotherme chemische Reaktion benötigte Reaktionswärme wird direkt dem abgeführten Rauchgas in dem dritten Abschnitt 124 des brennerspezifischen Rauchgaskanals 120 entzogen.

Das Wärmerückgewinnungssystem 100 umfasst ferner eine Oxidationsmitteleinheit 106, die analog zu der Brennstoffeinheit 105 vorgesehen ist, um für alle Brenner 101 gemeinsam ein Oxidationsmittel bereitzustellen, beispielsweise Sauerstoff.

Die Oxidationsmitteleinheit 106 ist analog zu der Brennstoffeinheit 105 und der Rezirkulationseinheit 104 als eine gemeinsame Oxidationsmittelleitung ausgebildet und verläuft zumindest teilweise parallel oder zumindest im Wesentlichen parallel zu der Ofenwand sowie zu der Rezirkulationsleitung 104 und der Brennstoffleitung 105. Es versteht sich, dass die Oxidationsmitteleinheit 106 noch weitere Elemente aufweisen kann, beispielsweise einen Tank zum Speichern des Sauerstoffs sowie ein Gebläse oder eine Pumpe.

Für jeden Brenner 101 ist ferner eine brennerspezifische Oxidationsmittelzufuhr 160 vorgesehen, die dazu eingerichtet ist, dem jeweiligen Brenner 101 Oxidationsmittel aus der Oxidationsmitteleinheit 106 zuzuführen, insbesondere eine brennerspezifische Menge des Oxidationsmittels.

Zu diesem Zweck umfassen die brennerspezifischen Oxidationsmittelzufuhren 160 jeweils eine Leitung 162 von der gemeinsamen Oxidationsmittelleitung 106 zu dem jeweiligen Brenner 101 und eine Ventileinheit 161 in dieser Leitung 162.

Analog zu den brennerspezifischen Rauchgaszufuhren 140 verlaufen auch die Leitungen 162 der brennerspezifischen Oxidationsmittelzufuhren 160 jeweils zumindest teilweise in dem brennerspezifischen Rauchgaskanal 120 des jeweiligen Brenners 101. Somit ist thermische Energie des abgeführten Rauchgases in dem jeweiligen brennerspezifischen Rauchgaskanal 120 auf das Oxidationsmittel in der jeweiligen brennerspezifischen Oxidationsmittelzufuhr 160 übertragbar.

Zu diesem Zweck verläuft ein Abschnitt 163 der Leitung 162 jeder brennerspezifischen Rauchgaszufuhr 160 jeweils in dem vierten Abschnitt 126 des jeweiligen brennerspezifischen Rauchgaskanal 120. Dieser Abschnitt 163 stellt somit insbesondere einen Wärmeübertrager dar.

In den vierten Abschnitten 126 der brennerspezifischen Rauchgaskanäle 120 ist dabei jeweils dieser Abschnitt 163 der brennerspezifischen Oxidationsmittelzufuhr 160 stromabwärts des Abschnitts 143 der brennerspezifischen Rauchgaszufuhr 140 angeordnet.

Der Sauerstoff wird in der Leitung 162 beispielsweise von einer Temperatur von etwa 20°C auf ca. 250°C erwärmt. Wie bereits erläutert besitzt das Rauchgas in den vierten Abschnitten 126 stromabwärts dieser Wärmeübertrager 163 eine Temperatur von ca. 389°C und wird dann in dem gemeinsamen Rauchgaskanal 130 gesammelt.

Wie weiter oben erläutert, weist der Ofen 102 insbesondere an mehreren Seiten Brenner 101 auf. Insbesondere ist an jeder der Seite des Ofens 102, an welcher Brenner 101 angeordnet sind, ein entsprechender Abschnitt des Wärmerückgewinnungssystems 100 analog zu dem in Figur 1 gezeigten Abschnitt vorgesehen.

Eine Steuereinheit 170 ist zum Steuern des Wärmerückgewinnungssystems 100 vorgesehen, insbesondere zum Steuern der einzelnen Klappen 121 sowie der einzelnen Ventileinheiten 141, 151, 161. Insbesondere können somit für jeden Brenner 101 die brennerspezifischen Menge des abgeführten Rauchgases, des Brennstoffs, des rezirkulierten Rauchgases und des Oxidationsmittels individuell und unabhängig voneinander gesteuert bzw. geregelt werden.

Durch das Wärmerückgewinnungssystem 100 wird somit eine individuelle Brennerregelung sowie eine individuelle, brennerspezifische rekuperative Wärmerückgewinnung für jeden einzelnen der Brenner 101 ermöglicht. Somit lassen sich beliebige, zweckmäßige Verteilungen der Feuerungsleistungen der einzelnen Brenner 101 einstellen, wodurch insbesondere gezielt Einfluss auf eine Qualität von in dem Ofen 102 bearbeiteten Materials, wie bspw. Glas, genommen werden kann.

Die brennerspezifischen Rauchgaskanäle 120 stellen eine besonders effektive Möglichkeit dar, um für jeden einzelnen Brenner 101 individuell das Oxidationsmittel und das rezirkulierte Rauchgas vorzuwärmen und ferner die Reformierungsreaktion des vorgewärmten rezirkulierten Rauchgases und des Brennstoffs durchzuführen. Vorwärmung der einzelnen Medien erfolgt in unmittelbarer Nähe zum jeweiligen Brenner 101, wodurch keine langen Transportleitungen benötigt werden und unerwünschte Wärmeverluste verhindert werden. Da sämtliche Ventileinheiten 141, 151, 161 außerhalb der brennerspezifischen Rauchgaskanäle 120 und des gemeinsamen Rauchgaskanals 130 angeordnet sind, wird eine einfache Wartung, Reparatur und Reinigung ermöglicht.

Das Wärmerückgewinnungssystem 100 ist ferner dazu eingerichtet, ein Verfahren zur Wärmerückgewinnung aus einem von einem Brenner erzeugten Rauchgas durchzuführen, wie es in der Patentanmeldung EP 3 336 430 A1 der Anmelderin offenbart wird. Für eine detaillierte Erläuterung dieses Verfahrens sei an dieser Stelle nochmals vollumfänglich auf die Patentanmeldung EP 3 336 430 A1 verwiesen.

### Bezuqszeichenliste

- 100: Wärmerückgewinnungssystem
- 101: Brenner
- 102: Ofen
- 103: Gebläse
- 104: Rezirkulationseinheit, Rezirkulationsleitung
- 105: Brennstoffeinheit, Brennstoffleitung
- 106: Oxidationsmitteleinheit, Oxidationsmittelleitung
- 110: Fluideinheit, Reformereinheit
- 120: brennerspezifischer Rauchgaskanal
- 121: Klappenelement, Klappe
- 122: erster Abschnitt des brennerspezifischen Rauchgaskanals
- 123: zweiter Abschnitt des brennerspezifischen Rauchgaskanals
- 124: dritter Abschnitt des brennerspezifischen Rauchgaskanals
- 125: Umlenkelement, Umlenkblech
- 126: vierter Abschnitt des brennerspezifischen Rauchgaskanals
- 130: gemeinsamer Rauchgaskanal
- 131: Wasserzufuhr
- 132: Filter
- 133: Gebläse
- 134: Kamin/Atmosphäre
- 140: brennerspezifische Rauchgaszufuhr
- 141: Ventileinheit
- 142: Leitung
- 143: Abschnitt der Leitung 142, Wärmeübertrager
- 150: brennerspezifische Brennstoffzufuhr
- 151: Ventileinheit
- 152: Leitung
- 160: brennerspezifische Oxidationsmittelzufuhr
- 161: Ventileinheit
- 162: Leitung
- 163: Abschnitt der Leitung 162, Wärmeübertrager
- 170: Steuereinheit

## Patentansprüche

1. Wärmerückgewinnungssystem (100) für einen Ofen (102) mit einem oder einer Vielzahl von Brennern (101),
wobei für jeden Brenner (101) jeweils eine Fluideinheit (110) vorgesehen ist, um dem jeweiligen Brenner (101) ein Fluid zuzuführen, insbesondere eine brennerspezifische Menge des Fluids,
wobei für jeden Brenner (101) jeweils ein brennerspezifischer Rauchgaskanal (120) vorgesehen ist, der dazu eingerichtet ist, Rauchgas aus dem Ofen (102) abzuführen, insbesondere eine brennerspezifische Menge des Rauchgases,
wobei die Fluideinheit (110) jedes Brenners (101) zumindest teilweise in dem brennerspezifischen Rauchgaskanal (120) des jeweiligen Brenners (101) verläuft, so dass thermische Energie des abgeführten Rauchgases in dem brennerspezifischen Rauchgaskanal (120) auf ein Fluid in der Fluideinheit (110) übertragbar ist.

2. Wärmerückgewinnungssystem (100) nach Anspruch 1, wobei für jeden Brenner (101) jeweils eine brennerspezifische Brennstoffzufuhr (150) vorgesehen ist, die dazu eingerichtet ist, der Fluideinheit (110) des jeweiligen Brenners (101) einen Brennstoff zuzuführen, insbesondere eine brennerspezifische Menge des Brennstoffs.

3. Wärmerückgewinnungssystem (100) nach Anspruch 2, wobei eine Brennstoffeinheit (105) zur Bereitstellung des Brennstoffs vorgesehen ist und wobei jede brennerspezifische Brennstoffzufuhr (150) jeweils eine Leitung (152) von der Brennstoffeinheit (105) zu der jeweiligen Fluideinheit (110) des jeweiligen Brenners (101) und eine Ventileinheit (152) in dieser Leitung (151) umfasst.

4. Wärmerückgewinnungssystem (100) nach einem der vorstehenden Ansprüche, wobei die einzelnen brennerspezifischen Rauchgaskanäle (120) in einen gemeinsamen Rauchgaskanal (130) übergehen und wobei eine Rezirkulationseinheit (104) vorgesehen ist, die dazu eingerichtet ist, Rauchgas aus dem gemeinsamen Rauchgaskanal (130) als rezirkuliertes Rauchgas zu entnehmen.

5. Wärmerückgewinnungssystem (100) nach Anspruch 4, wobei in dem gesammelten Rauchgaskanal (130) und/oder in der Rezirkulationseinheit (104) eine Wasserzufuhr (131) und/oder ein Filter (132) vorgesehen sind.

6. Wärmerückgewinnungssystem (100) nach einem der Anspruch 4 oder 5, wobei für jeden Brenner (101) jeweils eine brennerspezifische Rauchgaszufuhr (140) vorgesehen ist, die dazu eingerichtet ist, der Fluideinheit (110) des jeweiligen Brenners (101) rezirkuliertes Rauchgas aus der Rezirkulationseinheit (104) zuzuführen, insbesondere eine brennerspezifische Menge des rezirkulierten Rauchgases.

7. Wärmerückgewinnungssystem (100) nach Anspruch 6, wobei jede brennerspezifische Rauchgaszufuhr (140) eine Leitung (142) von der Rezirkulationseinheit (104) zu der jeweiligen Fluideinheit (110) des jeweiligen Brenners (101) und eine Ventileinheit (142) in dieser Leitung (141) umfasst.

8. Wärmerückgewinnungssystem (100) nach Anspruch 6 oder 7, wobei jede brennerspezifische Rauchgaszufuhr (140) zumindest teilweise in dem brennerspezifischen Rauchgaskanal (120) des jeweiligen Brenners (101) verläuft, so dass thermische Energie des abgeführten Rauchgases in dem jeweiligen brennerspezifischen Rauchgaskanal (120) auf das rezirkulierte Rauchgas in der jeweiligen brennerspezifischen Rauchgaszufuhr (140) übertragbar ist.

9. Wärmerückgewinnungssystem (100) nach einem der vorstehenden Ansprüche, soweit rückbezogen auf Anspruch 2 und 6, wobei die Fluideinheit (110) jedes Brenners (101) jeweils als eine Reformereinheit ausgebildet ist, die dazu eingerichtet ist, mit Hilfe der aus dem abgeführten Rauchgas in dem jeweiligen brennerspezifischen Rauchgaskanal (120) des jeweiligen Brenners (101) übertragenen thermischen Energie eine Reformierungsreaktion des von der jeweiligen brennerspezifischen Brennstoffzufuhr (150) zugeführten Brennstoffs und des von der jeweiligen brennerspezifischen Rauchgaszufuhr (140) zugeführten rezirkulierten Rauchgases zumindest teilweise zu einem Synthesegas durchzuführen und das Synthesegas dem jeweiligen Brenner (101) zuzuführen.

10. Wärmerückgewinnungssystem (100) nach einem der vorstehenden Ansprüche,
wobei für jeden Brenner (101) jeweils eine brennerspezifische Oxidationsmittelzufuhr (160) vorgesehen ist, um dem jeweiligen Brenner ein Oxidationsmittel zuzuführen, insbesondere eine brennerspezifische Menge des Oxidationsmittels, und
wobei die brennerspezifische Oxidationsmittelzufuhr (160) jedes Brenners (101) zumindest teilweise in dem jeweiligen brennerspezifischen Rauchgaskanal (120) des jeweiligen Brenners (101) verläuft, so dass thermische Energie des abgeführten Rauchgases in dem brennerspezifischen Rauchgaskanal (120) auf das Oxidationsmittel in der brennerspezifischen Oxidationsmittelzufuhr (160) übertragbar ist.

11. Wärmerückgewinnungssystem (100) nach Anspruch 10, wobei eine Oxidationsmitteleinheit (106) zur Bereitstellung des Oxidationsmittels vorgesehen ist und wobei jede brennerspezifische Oxidationsmittelzufuhr (160) jeweils eine Leitung (162) von der Oxidationsmitteleinheit (106) zu dem jeweiligen Brenner (101) und eine Ventileinheit (161) in dieser Leitung (162) umfasst.

12. Wärmerückgewinnungssystem (100) nach einem der vorstehenden Ansprüche, wobei in den brennerspezifischen Rauchgaskanälen (120) jeweils mindestens ein Umlenkelement (125) vorgesehen ist, das dazu eingerichtet ist, das abgeführte Rauchgas in dem jeweiligen brennerspezifischen Rauchgaskanal (120) derart umzulenken, dass das Rauchgas mehrmals um die jeweilige Fluideinheit (110) herum strömt.

13. Wärmerückgewinnungssystem (100) nach einem der vorstehenden Ansprüche, wobei in jedem brennerspezifischen Rauchgaskanal (120) jeweils ein Klappenelement (121) vorgesehen ist, mittels welchem Rauchgas aus dem Ofen (102) abführbar ist, insbesondere die brennerspezifische Menge des Rauchgases.

14. Wärmerückgewinnungssystem (100) nach einem der vorstehenden Ansprüche, wobei die Fluideinheiten (110) jeweils mindestens ein Rohr, insbesondere jeweils mindestens ein Geradrohr, aus einem hochtemperaturfesten Werkstoff aufweisen, insbesondere aus Keramik.
